# EUROPÄISCHE PATENTSCHRIFT

(11) **EP 3 285 952 B1**
(45) Veröffentlichungstag und Bekanntmachung des Hinweises auf die Patenterteilung: **22.05.2024**
(21) Anmeldenummer: 16728586.5
(22) Anmeldetag: 21.04.2016
(51) Int. Cl.: G01H 1/00, B23K 7/10, B23K 10/00, B23K 9/013, B23K 26/38, B23K 26/14, B23K 26/70, B23K 31/10, H05H 1/34

(54) **VERFAHREN UND VORRICHTUNG ZUR ÜBERWACHUNG VON DÜSEN**
METHOD AND DEVICE FOR MONITORING NOZZLES
METHODE ET DISPOSITIF DE SURVEILLANCE DE BUSES

(30) Priorität: 23.04.2015 AT 503272015
(43) Veröffentlichungstag der Anmeldung: 28.02.2018
(73) Patentinhaber: Framag Industrieanlagenbau GmbH, 4873 Frankenburg (AT)
(72) Erfinder: SCHRATZBERGER, Josef, 4873 Frankenburg (AT); KRIEGISCH, Martin, 2103 Langenzersdorf (AT)
(74) Vertreter: KLIMENT & HENHAPEL
(86) Internationale Anmeldenummer: PCT/AT2016/050105
(87) Internationale Veröffentlichungsnummer: WO 2016/168877

(56) Entgegenhaltungen:
- EP-A1- 1 145 796
- WO-A1-01/33167
- WO-A1-90/04484
- WO-A2-2011/096681
- DE-B3-102007 061 718

## Beschreibung

Die vorliegende Erfindung betrifft ein Verfahren zur Regelung des Betriebszustandes der Austrittsdüse für schneidendes oder schneidunterstützendes Arbeitsgas eines Schneidbrenners gemäß dem Oberbegriff von Anspruch 1, sowie eine Vorrichtung zur Regelung des Betriebszustandes der Austrittsdüse für schneidendes oder schneidunterstützendes Arbeitsgas eines Schneidbrenners gemäß dem Oberbegriff von Anspruch 3.

Ein gattungsgemäßes Verfahren wurde in der WO 90/04484 A1 beschrieben. Weitere Verfahren betreffend Düsenvorrichtungen wurden in der EP 1 145 796 A1, der DE 10 2007 061718 B3, der WO 2011/096681 A2 und der WO 01/33167 A1 beschrieben. In der Brennschneidtechnik werden Brennschneidmaschinen eingesetzt, bei denen in einem Brennerkörper eines Schneidbrenners eine Austrittsdüse für schneidendes oder schneidunterstützendes Arbeitsgas eingesetzt ist. Die Ausführung der Austrittsdüse kann dabei je nach verwendetem Schneidbrenner variieren, so kann sie etwa eine Schneiddüse für die Zufuhr eines schneidenden Arbeitsgases (auch als Schneidgas bezeichnet) und eine Heizdüse für die Zufuhr eines schneidunterstützenden Arbeitsgases (auch als Heizgas bezeichnet) umfassen, wobei das Schneidgas über eine axiale Schneidgasleitung der Schneiddüse dem Werkstück zugeführt wird, und das Heizgas über eine ringspaltförmige Heizgasleitung oder in Form von konzentrisch um die Schneidgasleitung angeordneten Heizgasleitungen dem Werkstück zugeführt wird. Bei dem Schneidgas kann es sich etwa um Schneidsauerstoff handeln, und beim Heizgas um ein Brenngas-Sauerstoff-Gemisch, das durch eine Heizgaskammer bereitgestellt wird. Die vom Heizgas abgegebene und die bei der Verbrennung des Werkstücks entstehende Wärme ermöglicht eine fortlaufende Verbrennung durch das Schneidgas und folglich ein Schneiden des Werkstücks. Im Rahmen eines als Laserbrenners ausgeführten Schneidbrenners wird die thermische Energie zum Trennen des Werkstücks in Form eines Laserstrahls bereitgestellt, wobei die Austrittsdüse konzentrisch zum Laserstrahl angeordnet ist und dem Werkstück ein schneidunterstützendes Arbeitsgas zuführt, das den abgetragenen Werkstoff aus der Schnittfuge treibt und den Schnittvorgang somit unterstützt. Bei einem als Plasmaschneidbrenner ausgeführten Schneidbrenner umfasst die Austrittsdüse eine Schneiddüse für die Zufuhr eines Plasmagases als schneidendes Arbeitsgas. Der Betriebszustand der Austrittsdüse für schneidendes oder schneidunterstützendes Arbeitsgas eines Schneidbrenners umfasst einerseits die Vorschubgeschwindigkeit relativ zum Werkstück und den Abstand der Austrittsdüse zum Werkstück, aber auch Betriebszustände wie Durchflussmengen und Betriebsdruck des Arbeitsgases. Der Betriebszustand der Austrittsdüse wird durch Einstellung steuerbarer Betriebsparameter wie Vorschubgeschwindigkeit, Abstand zum Werkstück oder Betriebsdruck und Durchflussgeschwindigkeit des Arbeitsgases insbesondere so gewählt, dass das Schneidergebnis optimal ist. In der Praxis treten jedoch auch Einflussgrößen auf, die nicht oder kaum steuerbar sind, wie etwa Störungen des Schneidstrahls, Verschleiß oder Verschmutzung der Austrittsdüse, sowie Werkstückveränderungen hinsichtlich Dicke, Zusammensetzung oder Temperatur. Diese in der Regel schwer beherrschbaren Einflussgrößen beeinträchtigen das Schneidergebnis und können sogar zum Versagen des Schneidbrenners und längeren Stillstandzeiten etwa für den Austausch der Austrittsdüse führen. Daher wäre es wünschenswert, den momentanen Betriebszustand der Austrittsdüse in Echtzeit hinsichtlich eines optimalen Schneidergebnisses bewerten und nötigenfalls korrigieren zu können.

Es besteht somit das Ziel der Erfindung darin, den Betriebszustand der Austrittsdüse hinsichtlich eines optimalen Schneidergebnisses unter Einbeziehung schwer beherrschbarer und kaum messbarer Einflussgrößen wie Werkstückveränderungen oder Verschleiß der Austrittsdüse zu bewerten, und in weiterer Folge mittels Anzeige oder Regelung des bewerteten Betriebszustandes das Schneidergebnis eines Schneidbrenners optimieren zu können.

Diese Ziele werden durch die Merkmale von Anspruch 1 sowie durch die Merkmale von Anspruch 3 erreicht.

Erfindungsgemäß wird somit zur Einbeziehung schwer beherrschbarer und kaum messbarer Einflussgrößen in der betrieblichen Praxis eines Schneidbrenners ein zeitabhängiges Vibrationssignal herangezogen, das aus jenen Vibrationen, die aufgrund des Betriebes der Austrittsdüse durch Körper- und/oder Luftschall auftreten, gewonnen wird und das gewissermaßen als "akustischer Fingerabdruck" einer weiteren Auswertung unterzogen wird. Aus dem zeitabhängigen Vibrationssignal wird erfindungsgemäß über bekannte Techniken der Fouriertransformation ein Frequenzspektrum für zumindest einen Frequenzbereich ermittelt. Wie noch näher ausgeführt werden wird kann im Frequenzspektrum für die Gesamtheit der Maxima und Minima eine Signalbreite definiert werden. Um diese Signalbreite im Frequenzspektrum für eine Bewertung oder Regelung des Betriebszustandes der Austrittsdüse heranziehen zu können, müssen die Amplituden im Frequenzraum einerseits hinreichend genau vom Vibrationssignal ableitbar sein und andererseits auch hinreichend genau mit einem bestimmten Betriebszustand der Austrittsdüse korrelieren. Daher müssen im Zuge der Fouriertransformation eine ausreichende Länge des für die Fouriertransformation verwendeten Vibrationssignals sowie eine ausreichende Samplingrate verwendet werden, da die Länge und Samplingrate die Frequenzauflösung des entstehenden Frequenzspektrums nach der Fouriertransformation definieren. Je schlechter die Frequenzauflösung ist, desto fehlerbehafteter sind die Amplituden im Frequenzspektrum und desto unzuverlässiger ist die Zuordnung zu unterschiedlichen Betriebszuständen. Die Anmelderin hat jedoch festgestellt, dass es bei durchaus praktikabler Wahl der Signallängen des transformierten Vibrationssignals und der Samplingraten möglich ist, die Amplituden des Frequenzspektrums hinreichend genau abzubilden, um sie nicht nur für eine zuverlässige Detektion unterschiedlicher Betriebszustände zu verwenden, sondern auch für eine effiziente Regelung, da die benötigten Signallängen deutlich unter einer Sekunde liegen und daher mehrere Regelsignale pro Sekunde gewonnen werden können.

Die Anmelderin hat ferner festgestellt, dass die Korrelation der Signalbreiten im Frequenzspektrum mit bestimmten Betriebszuständen der Austrittsdüse hinreichend genau ist, um jedenfalls drei unterschiedliche Betriebszustände mit hoher Zuverlässigkeit identifizieren zu können. Bislang durchgeführte Versuche legen zwar nahe, dass auch mehr als drei Betriebszustände zuverlässig identifiziert werden können, aber auch die zuverlässige Erkennung von drei Betriebszuständen erlaubt bereits überaus praktische Anwendungen. So können etwa ein unkritischer Betriebszustand, ein subkritischer Betriebszustand sowie ein kritischer Betriebszustand der Austrittsdüse definiert werden, etwa hinsichtlich eines Verschleißes oder einer Verstopfung der Austrittsdüse. Auf diese Weise kann mithilfe der Detektion eines subkritischen Betriebszustandes bereits präventiv ein drohendes Versagen der Austrittsdüse oder eine inakzeptable Schnittqualität angezeigt werden. Vorzugsweise wird daher auch vorgeschlagen, dass es sich bei den zumindest drei vorgegebenen Betriebszustandsbereichen der Austrittsdüse um einen unkritischen, einen kritischen und zumindest einen subkritischen Betriebszustandsbereich der Austrittsdüse handelt, und bei Identifizierung eines der zumindest drei Betriebszustandsbereiche als Ist-Betriebszustandsbereich der betreffende Betriebszustandsbereich visuell von den anderen Betriebszustandsbereichen unterscheidbar angezeigt wird. Die visuelle Anzeige kann etwa in Form einer grünen Leuchtanzeige erfolgen, falls ein unkritischer Betriebszustand als Ist-Betriebszustandsbereich identifiziert wurde, in Form einer gelben Leuchtanzeige, falls ein subkritischer Betriebszustand als Ist-Betriebszustandsbereich identifiziert wurde, und in Form einer roten Leuchtanzeige, falls ein kritischer Betriebszustand als Ist-Betriebszustandsbereich der Austrittsdüse identifiziert wurde.

Des Weiteren kann mithilfe der Identifizierung unterschiedlicher Betriebszustände der Austrittsdüse auch eine einfache Regelung der Austrittsdüse ermöglicht werden. Hierfür wird vorgeschlagen, dass es sich bei den zumindest drei vorgegebenen Betriebszustandsbereichen der Austrittsdüse um einen Soll-Betriebszustandsbereich und zumindest zwei Abweichungsbereiche der Austrittsdüse handelt, und bei Identifizierung eines der zumindest zwei Abweichungsbereiche als Ist-Betriebszustandsbereich der Austrittsdüse ein Regelsignal generiert wird, das den Ist-Betriebszustandsbereich der Austrittsdüse in den Soll-Betriebszustandsbereich überführt. Der Soll-Betriebszustandsbereich kann etwa ein mit einer bestimmten Schnittqualität korrelierender Bereich der Schnittgeschwindigkeit sein, der sozusagen als "akustischer Fingerabdruck" im Vibrationssignal dargestellt wird. Das Vibrationssignal stellt hierfür einen umfassenden Indikator dar, in dem sich auch schwer beherrschbare und kaum messbare Einflussgrößen wie etwa Werkstückveränderungen entlang der Schnittlinie manifestieren. Erweist sich etwa eine voreingestellte Schnittgeschwindigkeit aufgrund von zunächst unbekannten Werkstückveränderungen als zu hoch, so zeigt sich das über eine Veränderung des Vibrationssignals, die im Frequenzspektrum als veränderte Signalbreite identifiziert werden kann. Falls die ermittelte Signalbreite in einen als Abweichungsbereich vorgegebenen Betriebszustandsbereich fällt, so wird ein Abweichungsbereich als Ist-Betriebszustandsbereich identifiziert und ein entsprechendes Regelsignal generiert, das den Ist-Betriebszustandsbereich der Austrittsdüse wieder in den Soll-Betriebszustandsbereich überführt. Die entsprechende Nachregelung steuerbarer Betriebsparameter wie Vorschubgeschwindigkeit, Abstand zum Werkstück oder Betriebsdruck und Durchflussgeschwindigkeit des Arbeitsgases können dabei im Rahmen des fachmännischen Könnens vorgenommen werden.

Besonders effektiv hat sich dabei erwiesen, das Frequenzspektrum für mehrere Frequenzbereiche zu bestimmen, für die jeweils separate Signalbreiten ermittelt werden. Es ergibt sich somit eine diskrete Signalbreitenverteilung über den gesamten Frequenzraum, wobei eine bestimmte Signalbreitenverteilung einem vorgegebenen Betriebszustand zugeordnet werden kann. Die Kalibrierung erfolgt dabei wie im Fall einer einzigen Signalbreite anhand von Referenzmessungen des Vibrationssignals. So kann etwa das Vibrationssignal einer neuen Austrittsdüse, die weder Verschleiß noch Verschmutzung zeigt, für die Definition eines unkritischen Betriebszustandes verwendet werden, sowie Austrittsdüsen mit bekannten und als tolerabel bewerteten Verschleiß- oder Verschmutzungserscheinungen für die Definition eines subkritischen Betriebszustandes, und Austrittsdüsen mit bekannten und als intolerabel bewerteten Verschleiß- oder Verschmutzungserscheinungen für die Definition eines kritischen Betriebszustandes. Ferner können auch Referenzmessungen des Vibrationssignals für optimale Schnittgeschwindigkeiten herangezogen und für die Definition eines Soll-Betriebszustandsbereiches sowie von Abweichungsbereichen verwendet werden. Dabei kann es vorteilhaft sein, die Referenzmessungen vor Ort durchzuführen, da die Betriebsbedingungen im konkreten Anwendungsfall durchaus variieren können, und die Kalibrierung des erfindungsgemäßen Verfahrens sowie der erfindungsgemäßen Vorrichtung somit anwendungsspezifisch vorzunehmen.

Zur Durchführung des erfindungsgemäßen Verfahrens wird erfindungsgemäß auch eine Vorrichtung zur Regelung des Betriebszustandes der Austrittsdüse für schneidendes oder schneidunterstützendes Arbeitsgas eines Schneidbrenners gemäß Anspruch 3 vorgeschlagen.

Wie bereits ausgeführt wurde kann die Regelungseinheit vorzugsweise als Anzeige- oder Regelungseinheit mit zumindest ein Leuchtmittel ausgeführt sein, das den identifizierten Ist-Betriebszustandsbereich visuell von den anderen Betriebszustandsbereichen unterscheidbar zur Anzeige bringt. Insbesondere kann die Anzeige- oder Regelungseinheit drei Leuchtmittel umfassen, wobei zwei Leuchtmittel einem unkritischen und einem kritischen Betriebszustand zugeordnet sind, und ein weiteres Leuchtmittel einem subkritischen Betriebszustand zugeordnet ist.

Die Erfindung wird in weiterer Folge anhand von Ausführungsbeispielen mithilfe der beiliegenden Zeichnungen näher erläutert. Es zeigen hierbei die
Fig. 1 eine schematische Darstellung eines Brennerkörpers mit Austrittsdüse und einer erfindungsgemäßen Vorrichtung,
Fig. 2 den Brennerkörper mit Austrittsdüse der Fig. 1 von unten gesehen,
Fig. 3 eine schematische Darstellung eines zeitabhängigen Vibrationssignals,
Fig. 4a ein erstes Frequenzspektrum, das aus dem Vibrationssignal der Fig. 3 gewonnen wurde,
Fig. 4b ein zweites Frequenzspektrum, das aus dem Vibrationssignal der Fig. 3 gewonnen wurde, und die
Fig. 4c ein drittes Frequenzspektrum, das aus dem Vibrationssignal der Fig. 3 gewonnen wurde.

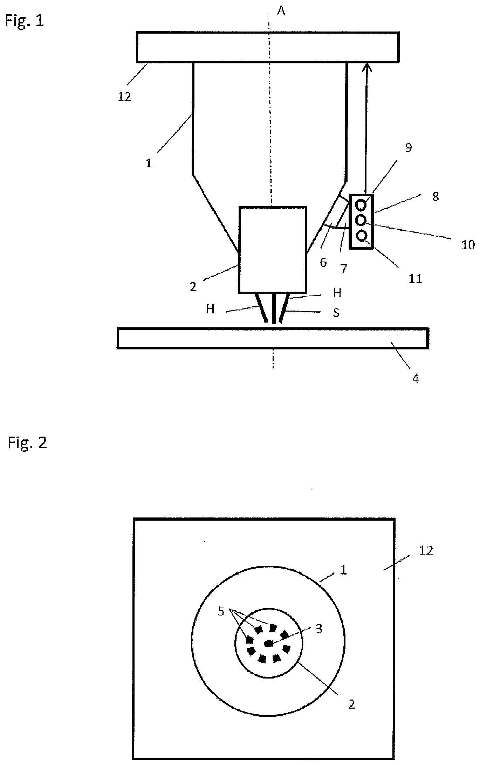

Zunächst wird auf die Fig. 1 Bezug genommen, die eine schematische Darstellung eines Brennerkörpers 1 eines Schneidbrenners mit einer Mittelachse A und einer axial angeordneten Austrittsdüse 2 zeigt. Wie insbesondere auch in der Fig. 2 ersichtlich ist, umfasst die Austrittsdüse 2 eine axial verlaufende und zentral angeordnete Schneidgasleitung 3, über die ein Schneidgas S als schneidendes Arbeitsgas dem Werkstück 4 zugeführt wird. Die Austrittsdüse 2 umfasst ferner mehrere konzentrisch um die Schneidgasleitung 3 angeordnete Heizgasleitungen 5, über die ein Heizgas H als schneidunterstützendes Arbeitsgas dem Werkstück 4 zugeführt wird. Die vom Heizgas H abgegebene und die bei der Verbrennung des Werkstücks 4 entstehende Wärme ermöglicht eine fortlaufende Verbrennung durch das Schneidgas S und folglich ein Schneiden des Werkstücks 4, etwa eine Bramme.

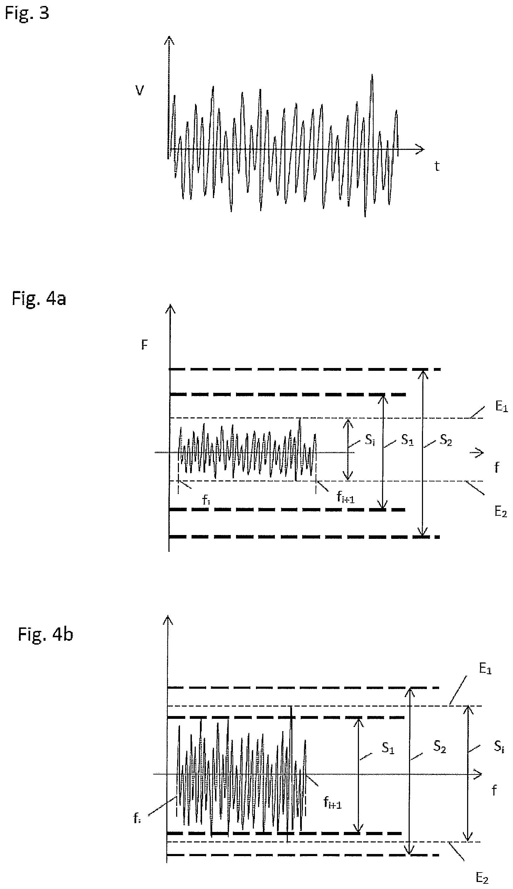

Die Geräuschentwicklung bei der Bearbeitung des Werkstücks 4 mit einem Schneidbrenner ist in der Regel sehr groß. Dabei wird ein Teil des Luftschalls in die Austrittsdüse und den Brennerkörper 1 rückgekoppelt. Die dadurch verursachten Vibrationen des Brennerkörpers 1 werden im Folgenden auch als Körperschall bezeichnet. Erfindungsgemäß wird das akustische Feld innerhalb und außerhalb des Brennerkörpers 1 ausgenutzt, um Aussagen über den Betriebszustand treffen zu können und in weiterer Folge Optimierungen des Betriebszustandes vorzunehmen. Hierfür ist ein Vibrationssensor 6 im Nahbereich des Brennerkörpers 1 angeordnet, vorzugsweise direkt am Brennerkörper 1 selbst. Der Vibrationssensor 6 misst Vibrationen, die aufgrund des Betriebes der Austrittsdüse durch Körper- und/oder Luftschall auftreten, als zeitabhängiges Vibrationssignal V, wie es etwa in der Fig. 3 dargestellt ist.

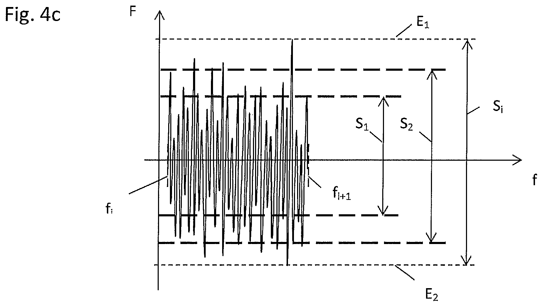

Das Vibrationssignal V wird einer Auswerteeinheit 7 bereitgestellt, die zur Identifizierung eines Ist-Betriebszustandsbereiches der Austrittsdüse 2 dem gemessenen Vibrationssignal V einen von zumindest drei vorgegebenen Betriebszustandsbereichen zuordnet. Hierfür wird das zeitabhängige Vibrationssignal V einer Fouriertransformation unterworfen, um ein Frequenzspektrum F des Vibrationssignals V zu gewinnen, beispielsweise mithilfe der Diskreten Fouriertransformation (DFT), die etwa über eine so genannte schnelle Fouriertransformation (FFT) ausgeführt wird. Für die Fouriertransformation muss das zeitabhängige Vibrationssignal V mit einer ausreichend hohen Samplingrate über eine ausreichend lange Zeitdauer abgetastet werden. Erhält eine gewöhnliche DFT eine Anzahl von N Datenpunkten eines abgetasteten Vibrationssignals V zur Auswertung, so gibt sie auch N Datenpunkte zurück, die "Amplituden" des Frequenzspektrums F. Zur Darstellung Amplitude - über-Frequenz werden entsprechend ebenfalls N Frequenzwerte benötigt. Die maximal detektierbare Frequenz bei der DFT ist die halbe Samplingrate. Die Amplituden der zum Vibrationssignal V beitragenden Schwingungen können im Frequenzspektrum F in Form von Signalspitzen abgelesen werden. Die Gesamtheit der als Minima und Maxima auftretenden Signalspitzen kann über zwei parallel zur Frequenzachse verlaufende Einhüllende E₁, E₂ begrenzt werden, wobei der Abstand der beiden Einhüllenden E₁, E₂ im Frequenzraum eine Signalbreite S des Frequenzspektrums F definiert, wie im Folgenden anhand der Fig. 4 erläutert werden wird. Für die Ermittlung der Signalbreite S kann das Frequenzspektrum auch in Frequenzbereiche fᵢ, fᵢ₊₁ (i=1...M) unterteilt werden, für die jeweils eine Signalbreite S; ermittelt wird. Die sich ergebende Anzahl von M Signalbreiten S; bildet eine Signalbreitenverteilung.

Um diese Signalbreiten S; beziehungsweise die Signalbreitenverteilung für eine Bewertung des Betriebszustandes heranziehen zu können ist darauf zu achten, im Zuge der Fouriertransformation eine ausreichende Länge des für die Fouriertransformation verwendeten Vibrationssignals V sowie eine ausreichende Samplingrate zu verwenden und beide Parameter im Zuge der praktischen Anwendung konstant zu halten, da die Länge und Samplingrate die Frequenzauflösung des entstehenden Frequenzspektrums F nach der Fouriertransformation definieren. Je schlechter die Frequenzauflösung ist, desto fehlerbehafteter sind nämlich die Amplituden im Frequenzspektrum F und desto unzuverlässiger ist die Zuordnung zu unterschiedlichen Betriebszuständen. Die Anmelderin hat jedoch festgestellt, dass es durch Wahl praktikabler Signallängen des transformierten Vibrationssignals V von unterhalb einer Sekunde und praktikabler Samplingraten möglich ist, die Amplituden des Frequenzspektrums F hinreichend genau abzubilden, um sie für eine zuverlässige Detektion von zumindest drei Betriebszuständen verwenden zu können. Dabei hat sich herausgestellt, dass auch eine weitere mögliche Fehlerquelle ausgeschlossen werden kann. Die Höhe der Signalspitzen eines Frequenzspektrums F wird nämlich auch durch die Wahl des Zeitintervalls, in dem die Daten für die Fouriertransformation akquiriert werden, beeinflusst. Wird durch ungeschickte Wahl dieses Zeitintervalls eine nicht-ganzzahlige Zahl an Vibrationsperioden aufgenommen, verbreitert dies die Signalspitzen im Frequenzspektrum F und verringert deren Höhe. Die Anmelderin hat jedoch festgestellt, dass dieser Effekt für den vorliegenden Anwendungsfall der Analyse eines akustischen Feldes eines Schneidbrenners zur Bewertung der Betriebszustände der Austrittsdüse 2 vernachlässigbar ist.

Um die Signalbreiten S; im Frequenzspektrum F für eine Bewertung des Betriebszustandes der Austrittsdüse 2 heranziehen zu können ist ferner darauf zu achten, im Zuge der Fouriertransformation stets dieselbe mathematische Normierung für die Fouriertransformierte vorzunehmen, die aber vom jeweils verwendeten mathematischen Algorithmus abhängt. Wird somit stets derselbe Algorithmus verwendet, was in der Praxis durch herstellerseitig erfolgte Konfigurierung der Auswerteeinheit 7 der Fall sein wird, können in weiterer Folge ohne weiteres unterschiedliche Signalbreiten S; unterschiedlichen Betriebszustandsbereichen zuverlässig zugeordnet werden.

Die Genauigkeit des erfindungsgemäßen Verfahrens ist hinreichend hoch, um zumindest drei unterschiedliche Betriebszustandsbereiche mit hoher Zuverlässigkeit identifizieren zu können, womit bereits überaus praktische Anwendungen möglich werden, wie anhand der Fig. 4a-c erläutert wird. Die Fig. 4a-c zeigen dabei Beispiele unterschiedlicher Frequenzspektren F für einen Frequenzbereich f;, fᵢ₊₁, die aus unterschiedlichen Vibrationssignalen V abgeleitet werden könnten. Die Fig. 4a zeigt etwa ein Frequenzspektrum F mit vergleichsweise niedrigen Signalspitzen. Die Maxima und Minima dieses Frequenzspektrums F können mithilfe zweier zur Frequenzachse paralleler Einhüllende E₁, E₂ eingegrenzt werden, wobei der Abstand einer ersten Einhüllenden E₁ zur Frequenzachse durch das höchste Maximum der Signalspitzen festgelegt wird, und der Abstand einer zweiten Einhüllenden E₂ zur Frequenzachse durch das kleinste Minimum. Der Normalabstand der beiden Einhüllenden E₁, E₂ zueinander definiert die Signalbreite S; im betreffenden Frequenzbereich fᵢ, fᵢ₊₁.

In weiterer Folge wird die auf diese Weise ermittelte Signalbreite S; mit drei vorgegebenen Betriebszustandsbereichen verglichen, die anhand von Referenzmessungen gewonnen wurden. Ein erster Betriebszustandsbereich ist etwa für Signalbreiten S; definiert, die unterhalb eines ersten Schwellwertes S₁ liegen und in weiterer Folge als unkritischer Betriebszustandsbereich bezeichnet wird. Falls die ermittelte Signalbreite S; unterhalb dieses ersten Schwellwertes S₁ liegt, wird dieser erste, unkritische Betriebszustandsbereich als momentaner Ist-Betriebszustandsbereich identifiziert (siehe Fig. 4a).

Ein zweiter Betriebszustandsbereich ist für Signalbreiten S; definiert, die oberhalb des ersten Schwellwertes S₁ liegen, aber unterhalb eines zweiten Schwellwertes S₂, und in weiterer Folge als subkritischer Betriebszustandsbereich bezeichnet wird. Falls die ermittelte Signalbreite S; oberhalb des ersten Schwellwertes S₁ liegt, aber unterhalb des zweiten Schwellwertes S₂, wird dieser zweite, subkritische Betriebszustandsbereich als momentaner Ist-Betriebszustandsbereich identifiziert (siehe Fig. 4b).

Ein dritter Betriebszustandsbereich ist für Signalbreiten S; definiert, die oberhalb des zweiten Schwellwertes S₂ liegen und in weiterer Folge als kritischer Betriebszustandsbereich bezeichnet wird. Falls die ermittelte Signalbreite S; oberhalb des zweiten Schwellwertes S₂ liegt, wird dieser dritte, kritische Betriebszustandsbereich als momentaner Ist-Betriebszustandsbereich identifiziert (siehe Fig. 4c).

Falls mehrere Frequenzbereiche fᵢ, fᵢ₊₁ analysiert werden und somit mehrere Signalbreiten S; in Form einer Signalbreitenverteilung zur Verfügung stehen, kann eine Mittelung der Signalbreiten S; vorgenommen werden, oder eine Zuordnung bestimmter Signalbreitenverteilungen zu bestimmten Betriebszustandsbereichen. So kann etwa eine Folge zunehmender Signalbreiten S; bei zunehmender Frequenz für ein und dasselbe Vibrationssignal V charakteristisch für ein bestimmtes Ereignis sein, etwa eine Verstopfung der Schneidgasleitung 3. Ein Maximum einer Signalbreitenverteilung für einen bestimmten Frequenzbereich fᵢ, fᵢ₊₁ könnte wiederum charakteristisch für ein anderes Ereignis sein, etwa wenn das Schneidgas S ins Leere ausbläst und auf kein Werkstück 4 trifft, etwa beim Anschnitt an der Brammenkante. Im Zuge von Referenzmessungen können Ereignisse, deren Erkennen gewünscht ist, auf charakteristische Eigenheiten der mit ihnen assoziierten Signalbreiten S; oder deren Signalbreitenverteilungen analysiert werden und zukünftige Frequenzspektren F auf diese Eigenheiten untersucht werden.

In weiterer Folge generiert eine Anzeige- oder Regelungseinheit 8 ein dem jeweiligen Ist-Betriebszustandsbereich zugeordnetes Anzeige- oder Regelsignal. Falls es sich bei den zumindest drei vorgegebenen Betriebszustandsbereichen der Austrittsdüse 2 um einen unkritischen, einen kritischen und zumindest einen subkritischen Betriebszustandsbereich der Austrittsdüse 2 handelt, so kann bei Identifizierung eines unkritischen Betriebszustandsbereiches als Ist-Betriebszustandsbereich eine visuelle Anzeige in Form einer grünen Leuchtanzeige 9 erfolgen. Falls ein subkritischer Betriebszustand als Ist-Betriebszustandsbereich identifiziert wurde, kann etwa ein Anzeigesignal in Form einer gelben Leuchtanzeige 10 generiert werden, und falls ein kritischer Betriebszustand als Ist-Betriebszustandsbereich identifiziert wurde, in Form einer roten Leuchtanzeige 11. Falls der kritische Betriebszustandsbereich hinsichtlich eines Verschleißes oder einer Verstopfung der Austrittsdüse 2 definiert wurde, kann auf diese Weise mithilfe der Detektion eines subkritischen Betriebszustandsbereiches bereits präventiv ein drohendes Versagen der Austrittsdüse 2 oder eine inakzeptable Schnittqualität angezeigt werden.

Des Weiteren wird erfindungsgemäß mithilfe der Identifizierung unterschiedlicher Betriebszustandsbereiche der Austrittsdüse 2 auch eine einfache Regelung der Austrittsdüse 2 ermöglicht. Hierfür werden für drei vorgegebene Betriebszustandsbereiche der Austrittsdüse 2 ein Betriebszustandsbereich als Soll-Betriebszustandsbereich und zwei andere Betriebszustandsbereiche als Abweichungsbereiche definiert. Unter Bezugnahme auf die Fig. 4 kann etwa ein erster Abweichungsbereich für Signalbreiten S; definiert werden, die gemäß Fig. 4a unterhalb eines ersten Schwellwertes S₁ liegen. Falls die ermittelte Signalbreite S; unterhalb dieses ersten Schwellwertes S₁ liegt, wird dieser erste Abweichungsbereich als momentaner Ist-Betriebszustandsbereich identifiziert und ein Regelsignal generiert, das den Ist-Betriebszustandsbereich der Austrittsdüse 2 in den Soll-Betriebszustandsbereich überführt.

Als Soll-Betriebszustandsbereich ist dabei jener Betriebszustandsbereich definiert, bei dem die Signalbreite S; oberhalb des ersten Schwellwertes S₁ liegt, aber unterhalb eines zweiten Schwellwertes S₂ (siehe Fig. 4b). Falls die ermittelte Signalbreite S; oberhalb des ersten Schwellwertes S₁ liegt, aber unterhalb des zweiten Schwellwertes S₂, wird dieser Soll-Betriebszustandsbereich als momentaner Ist-Betriebszustandsbereich identifiziert und kein Regelsignal generiert.

Ein zweiter Abweichungsbereich kann für Signalbreiten S; definiert werden, die gemäß Fig. 4c oberhalb des zweiten Schwellwertes S₂ liegen. Falls die ermittelte Signalbreite S; oberhalb des zweiten Schwellwertes S₂ liegt, wird dieser zweite Abweichungsbereich als momentaner Ist-Betriebszustandsbereich identifiziert und wiederum ein Regelsignal generiert, das den Ist-Betriebszustandsbereich der Austrittsdüse 2 in den Soll-Betriebszustandsbereich überführt. Der Soll-Betriebszustandsbereich kann etwa ein mit einer bestimmten Schnittqualität korrelierender Bereich der Schnittgeschwindigkeit sein, der sich sozusagen als "akustischer Fingerabdruck" im Vibrationssignal V darstellt und im Frequenzspektrum F als charakteristische Signalbreite S; oder charakteristische Signalbreitenverteilung sichtbar wird. Erweist sich etwa eine voreingestellte Schnittgeschwindigkeit aufgrund von zunächst unbekannten Werkstückveränderungen als zu hoch, so zeigt sich das über eine Veränderung des Vibrationssignals V, die im Frequenzspektrum F als veränderte Signalbreite S; identifiziert werden kann. Falls die ermittelte Signalbreite S; in einen als Abweichungsbereich vorgegebenen Betriebszustandsbereich fällt, so wird ein entsprechendes Regelsignal generiert, das von der Anzeige- oder Regelungseinheit 8 an eine Steuerung 12 des Schneidbrenners übermittelt wird, um den Ist-Betriebszustandsbereich der Austrittsdüse 2 wieder in den Soll-Betriebszustandsbereich zu überführen. Die entsprechende Nachregelung steuerbarer Betriebsparameter wie Vorschubgeschwindigkeit, Abstand zum Werkstück 4 oder Betriebsdruck und Durchflussgeschwindigkeit des Arbeitsgases wird dabei erfindungsgemäß vorgenommen.

Mithilfe der Erfindung ist es somit möglich, den Betriebszustand der Austrittsdüse 2 hinsichtlich eines optimalen Schneidergebnisses unter Einbeziehung schwer beherrschbarer und kaum messbarer Einflussgrößen wie Werkstückveränderungen oder Verschleiß der Austrittsdüse 2 zu bewerten, und in weiterer Folge mittels Regelung des bewerteten Betriebszustandes das Schneidergebnis eines Schneidbrenners zu optimieren.

## Patentansprüche

1. Verfahren zur Regelung des Betriebszustandes einer Austrittsdüse (2) für schneidendes oder schneidunterstützendes Arbeitsgas eines Schneidbrenners, der Betriebszustand umfassend die Vorschubgeschwindigkeit relativ zum Werkstück und den Abstand der Austrittsdüse zum Werkstück, sowie Durchflussmengen und Betriebsdruck des Arbeitsgases, wobei mithilfe eines Vibrationssensors (6) aufgrund des Betriebes der Austrittsdüse (2) durch Körper- und/oder Luftschall auftretende Vibrationen als zeitabhängiges Vibrationssignal (V) gemessen werden und ein Frequenzspektrum (F) des gemessenen Vibrationssignals (V) für zumindest einen Frequenzbereich (fᵢ, fᵢ₊₁, i=1,2...M) ermittelt wird, **dadurch gekennzeichnet, dass** mittels zweier Einhüllende (E₁, E₂) der Signalspitzen des Frequenzspektrums (F) in dem zumindest einen Frequenzbereich (fᵢ, fᵢ₊₁) eine Signalbreite (Sᵢ) oder bei mehreren Frequenzbereichen (fᵢ, fᵢ₊₁) eine Signalbreitenverteilung ermittelt wird, die zur Identifizierung eines Ist-Betriebszustandsbereiches der Austrittsdüse (2) einem von zumindest drei vorgegebenen Betriebszustandsbereichen der Austrittsdüse (2) zugeordnet wird, und in weiterer Folge ein dem Ist-Betriebszustandsbereich zugeordnetes Regelsignal generiert wird, wobei es sich bei den zumindest drei vorgegebenen Betriebszustandsbereichen der Austrittsdüse (2) um einen Soll-Betriebszustandsbereich und zumindest zwei Abweichungsbereiche der Austrittsdüse (2) handelt, und bei Identifizierung eines der zumindest zwei Abweichungsbereiche als Ist-Betriebszustandsbereich der Austrittsdüse (2) ein Regelsignal generiert wird, das den Ist-Betriebszustandsbereich der Austrittsdüse (2) durch entsprechende Nachregelung steuerbarer Betriebsparameter wie Vorschubgeschwindigkeit relativ zum Werkstück, Abstand der Austrittsdüse zum Werkstück, sowie Durchflussmengen und Betriebsdruck des Arbeitsgases in den Soll-Betriebszustandsbereich überführt.

2. Verfahren nach Anspruch 1, **dadurch gekennzeichnet, dass** es sich bei den zumindest drei vorgegebenen Betriebszustandsbereichen der Austrittsdüse (2) um einen unkritischen, einen kritischen und zumindest einen subkritischen Betriebszustandsbereich der Austrittsdüse (2) handelt, und bei Identifizierung eines der zumindest drei Betriebszustandsbereiche als Ist-Betriebszustandsbereich der betreffende Betriebszustandsbereich visuell von den anderen Betriebszustandsbereichen unterscheidbar angezeigt wird.

3. Vorrichtung zur Regelung des Betriebszustandes einer Austrittsdüse (2) für schneidendes oder schneidunterstützendes Arbeitsgas eines Schneidbrenners - der Betriebszustand umfassend die Vorschubgeschwindigkeit relativ zum Werkstück und den Abstand der Austrittsdüse zum Werkstück, sowie Durchflussmengen und Betriebsdruck des Arbeitsgases-mit einem Vibrationssensor (6) zur Messung der aufgrund des Betriebes der Austrittsdüse (2) durch Körper- und/oder Luftschall auftretenden Vibrationen, **dadurch gekennzeichnet, dass** sie eine Auswerteeinheit (7) umfasst, die dazu eingerichtet ist dem gemessenen Vibrationssignal (V) zur Identifizierung eines Ist-Betriebszustandsbereiches der Austrittsdüse (2) einen von zumindest drei vorgegebenen Betriebszustandsbereichen zuzuordnen, wobei es sich bei den zumindest drei vorgegebenen Betriebszustandsbereichen der Austrittsdüse (2) um einen Soll-Betriebszustandsbereich und zumindest zwei Abweichungsbereiche der Austrittsdüse (2) handelt, und eine Regelungseinheit (8) vorgesehen ist, die dazu eingerichtet ist ein dem Ist-Betriebszustandsbereich der Austrittsdüse (2) zugeordnetes Regelsignal zur Regelung des Ist-Betriebszustandsbereiches der Austrittsdüse (2) zu generieren, indem die Regelungseinheit (8) ausgelegt ist bei Identifizierung eines der zumindest zwei Abweichungsbereiche als Ist-Betriebszustandsbereich der Austrittsdüse (2) ein Regelsignal zu generieren, das den Ist-Betriebszustandsbereich der Austrittsdüse (2) durch entsprechende Nachregelung steuerbarer Betriebsparameter wie Vorschubgeschwindigkeit relativ zum Werkstück, Abstand der Austrittsdüse zum Werkstück, sowie Durchflussmengen und Betriebsdruck des Arbeitsgases in den Soll-Betriebszustandsbereich überführt.

4. Vorrichtung nach Anspruch 3, **dadurch gekennzeichnet, dass** die Regelungseinheit (8) als Anzeige- oder Regelungseinheit (8) mit zumindest einem Leuchtmittel (9, 10, 11) ausgeführt ist, das den identifizierten Ist-Betriebszustandsbereich visuell von den anderen Betriebszustandsbereichen unterscheidbar zur Anzeige bringt.

5. Vorrichtung nach Anspruch 4, **dadurch gekennzeichnet, dass** die Anzeige- oder Regelungseinheit (8) drei Leuchtmittel (9, 10, 11) umfasst, wobei zwei Leuchtmittel (9, 11) einem unkritischen und einem kritischen Betriebszustandsbereich zugeordnet sind, und ein weiteres Leuchtmittel (10) einem subkritischen Betriebszustandsbereich zugeordnet ist.

6. Schneidbrenner mit einer Vorrichtung nach einem der Ansprüche 3 bis 5.

## Claims

1. Method for regulating the operating state of an outlet nozzle (2) for cutting or cutting-assisting working gas of a cutting torch, the operating state comprising the feed speed relative to the workpiece and the distance of the outlet nozzle from the workpiece, as well as flow rates and operating pressure of the working gas, wherein with the aid of a vibration sensor (6) vibrations occurring due to the operation of the outlet nozzle (2) caused by structure-borne and/or airborne sound are measured as a time-dependent vibration signal (V) and a frequency spectrum (F) of the measured vibration signal (V) for at least one frequency range (fᵢ, fᵢ₊₁, i=1,2 ... M) is determined, **characterized in that** a signal width (Sᵢ) or, in the case of a plurality of frequency ranges (fᵢ, fᵢ₊₁), a signal width distribution is determined by means of two envelopes (E₁, E₂) of the signal peaks of the frequency spectrum (F) in the at least one frequency range (fᵢ, fᵢ₊₁), which is assigned to one of at least three predetermined operating state ranges of the outlet nozzle (2) in order to identify an actual operating state range of the outlet nozzle (2), and subsequently a regulating signal assigned to the actual operating state range is generated, wherein the at least three predetermined operating state ranges of the outlet nozzle (2) are a target operating state range and at least two deviation ranges of the outlet nozzle (2), and a regulating signal is generated upon identification of one of the at least two deviation ranges as the actual operating state range of the outlet nozzle (2), which transfers the actual operating state range of the outlet nozzle (2) to the target operating state range by corresponding readjustment of controllable operating parameters such as feed speed relative to the workpiece, distance of the outlet nozzle from the workpiece, as well as flow rates and operating pressure of the working gas.

2. Method according to claim 1, **characterized in that** the at least three predetermined operating state ranges of the outlet nozzle (2) are a non-critical, a critical and at least one subcritical operating state range of the outlet nozzle (2), and when one of the at least three operating state ranges is identified as the actual operating state range, the relevant operating state range is displayed so as to be visually distinguishable from the other operating state ranges.

3. Device for regulating the operating state of an outlet nozzle (2) for cutting or cutting-assisting working gas of a cutting torch, the operating state comprising the feed speed relative to the workpiece and the distance of the outlet nozzle from the workpiece, as well as flow rates and operating pressure of the working gas, having a vibration sensor (6) for measuring the vibrations occurring due to the operation of the outlet nozzle (2) as a result of body and/or airborne sound, **characterized in that** it comprises an evaluation unit (7) which is adapted to assign one of at least three predetermined operating state ranges to the measured vibration signal (V) in order to identify an actual operating state range of the outlet nozzle (2), wherein the at least three predetermined operating state ranges of the outlet nozzle (2) are a target operating state range and at least two deviation ranges of the outlet nozzle (2), and a regulating unit (8) is provided which is adapted to generate a regulating signal associated with the actual operating state range of the outlet nozzle (2) for regulating the actual operating state range of the outlet nozzle (2), **in that** the regulating unit (8) is designed, when one of the at least two deviation ranges is identified as the actual operating state range of the outlet nozzle (2), to generate a regulating signal which transfers the actual operating state range of the outlet nozzle (2) to the target operating state range by corresponding readjustment of controllable operating parameters such as feed speed relative to the workpiece, distance of the outlet nozzle from the workpiece, and flow rates and operating pressure of the working gas.

4. Device according to claim 3, **characterized in that** the regulating unit (8) is designed as a display or regulating unit (8) having at least one illuminant (9, 10, 11) which displays the identified actual operating state range in a visually distinguishable manner from the other operating state ranges.

5. Device according to claim 4, **characterized in that** the display or regulating unit (8) comprises three illuminants (9, 10, 11), wherein two illuminants (9, 11) are assigned to a non-critical and a critical operating state range, and a further illuminant (10) is assigned to a subcritical operating state range.

6. Cutting torch having a device according to one of claims 3 to 5.

## Revendications

1. Procédé pour la régulation de l'état de fonctionnement d'une tuyère de sortie (2) pour un gaz de travail ou auxiliaire de découpage d'un chalumeau de découpage, l'état de fonctionnement comprenant la vitesse d'avancement par rapport à la pièce d'œuvre et la distance entre la tuyère de sortie et la pièce d'oeuvre, ainsi que les débits et la pression de service du gaz de travail, dans lequel des vibrations produites par le bruit de structure et/ou le bruit dans l'air résultant du fonctionnement de la tuyère de sortie (2) sont mesurées à l'aide d'un capteur de vibrations (6) sous la forme d'un signal de vibrations (V) dépendant du temps et un spectre de fréquences (F) du signal de vibrations (V) mesuré est déterminé pour au moins une plage de fréquences (fᵢ, fᵢ₊₁, i = 1, 2... M), **caractérisé en ce qu'**est déterminée, au moyen de deux enveloppantes (E1, E2) des pics de signal du spectre de fréquences (F) dans l'au moins une plage de fréquences (fᵢ, fᵢ₊₁), une amplitude de signal (Sᵢ) ou, dans plusieurs plages de fréquences (fᵢ, fᵢ₊₁), une distribution des amplitudes de signal, qui est associée à une plage parmi au moins trois plages d'états de fonctionnement prédéterminées de la tuyère de sortie (2) en vue de l'identification d'une plage d'états de fonctionnement réelle, après quoi un signal de régulation associé à la plage d'états de fonctionnement réelle est généré, les au moins trois plages d'états de fonctionnement prédéterminées de la tuyère de sortie (2) étant une plage d'états de fonctionnement de consigne et au moins deux plages de déviation de la tuyère de sortie (2), et un signal de régulation est généré quand une des au moins deux plages de déviation est identifiée comme plage d'états de fonctionnement réelle de la tuyère de sortie (2) et amène la plage d'états de fonctionnement réelle de la tuyère de sortie (2) dans la plage d'états de fonctionnement de consigne par un ajustement correspondant de paramètres de fonctionnement réglables tels que la vitesse d'avancement par rapport à la pièce d'œuvre, la distance entre la tuyère de sortie et la pièce d'oeuvre, ainsi que les débits et la pression de service du gaz de travail.

2. Procédé selon la revendication 1, **caractérisé en ce que** les au moins trois plages d'états de fonctionnement prédéterminées de la tuyère de sortie (2) sont une plage d'états de fonctionnement de la tuyère de sortie (2) non critique, une plage critique et une plage sous-critique et, quand une des au moins trois plages d'états de fonctionnement est identifiée corne plage d'états de fonctionnement réelle, la plage d'états de fonctionnement est affichée de façon à être différenciée visuellement des autres plages d'états de fonctionnement.

3. Dispositif pour la régulation de l'état de fonctionnement d'une tuyère de sortie (2) pour un gaz de travail ou auxiliaire de découpage d'un chalumeau de découpage, l'état de fonctionnement comprenant la vitesse d'avancement par rapport à la pièce d'oeuvre et la distance entre la tuyère de sortie et la pièce d'oeuvre, ainsi que les débits et la pression de service du gaz de travail, avec un capteur de vibrations (6) destiné à mesurer les vibrations produites par le bruit de structure et/ou le bruit dans l'air résultant du fonctionnement de la tuyère de sortie (2), **caractérisé en ce qu'**il comprend une unité d'analyse (7) qui est configurée pour associer le signal de vibrations (V) mesuré à une plage parmi au moins trois plages d'états de fonctionnement prédéterminées en vue de l'identification d'une plage d'états de fonctionnement réelle de la tuyère de sortie (2), les au moins trois plages d'états de fonctionnement prédéterminées de la tuyère de sortie (2) étant une plage d'états de fonctionnement de consigne et au moins deux plages de déviation de la tuyère de sortie (2), et il est prévu une unité de régulation (8) configurée pour générer un signal de régulation associé à la plage d'états de fonctionnement de la tuyère de sortie (2) pour réguler la plage d'états de fonctionnement réelle de la tuyère de sortie (2) par le fait que l'unité de régulation (8) est conçue pour générer un signal de régulation quand une des au moins deux plages de déviation est identifiée comme plage d'états de fonctionnement réelle de la tuyère de sortie (2) et amener ainsi la plage d'états de fonctionnement réelle de la tuyère de sortie (2) dans la plage d'états de fonctionnement de consigne par un ajustement correspondant de paramètres de fonctionnement réglables tels que la vitesse d'avancement par rapport à la pièce d'oeuvre, la distance entre la tuyère de sortie et la pièce d'oeuvre, ainsi que les débits et la pression de service du gaz de travail.

4. Dispositif selon la revendication 3, **caractérisé en ce que** l'unité de régulation (8) est conçue comme une unité d'affichage ou de régulation (8) munie d'au moins un voyant lumineux (9, 10, 11) qui visualise la plage d'états de fonctionnement réelle d'une manière pouvant être distinguée visuellement des autres plages d'états de fonctionnement.

5. Dispositif selon la revendication 4, **caractérisé en ce que** l'unité d'affichage ou de régulation (8) comprend trois voyants lumineux (9, 10, 11), parmi lesquels deux voyants lumineux (9, 11) sont associés à une plage d'états de fonctionnement non critique et à une plage critique et un autre voyant lumineux (10) est associé à une plage d'états de fonctionnement sous-critique.

6. Chalumeau de découpage muni d'un dispositif selon l'une des revendications 3 à 5.
